(19)

Europäisches Patentamt

European Patent Office

Office européen des brevets

(11) **EP 3 567 709 A1**

(12) **EUROPEAN PATENT APPLICATION**

(43) Date of publication:
**13.11.2019 Bulletin 2019/46**

(51) Int Cl.:
**H02M 1/00** *(2006.01)*

(21) Application number: **18171822.2**

(22) Date of filing: **11.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ABB Schweiz AG**
**5400 Baden (CH)**

(72) Inventors:
• **Riaz, Usama**
**02150 Espoo (FI)**
• **Rahman, F.M. Mahafugur**
**02210 Espoo (FI)**
• **Hinkkanen, Marko**
**02650 Espoo (FI)**
• **Routimo, Mikko**
**00380 Helsinki (FI)**

(74) Representative: **Kolster Oy Ab**
**(Salmisaarenaukio 1)**
**P.O. Box 204**
**00181 Helsinki (FI)**

(54) **CONTROL OF GRID CONNECTED CONVERTER**

(57)      A method in connection with control of a grid connected converter and a converter. The control comprising forming a current reference for the converter, feeding the current reference to a current controller for producing a voltage reference for the converter. The method comprises high-pass filtering the produced voltage reference or measured output voltage of the converter and modifying the current reference with the high-pass filtered voltage reference or measured output voltage of the converter.

FIG 1

**Description**

FIELD OF THE INVENTION

The invention relates to control of grid connected converter, and particularly to a vector control with improved properties.

BACKGROUND OF THE INVENTION

Voltage-source converters are widely used in power systems to connect renewable energy sources to the utility grid. The utility grid becomes weak or even very weak when the converters are connected with long transmission lines. The strength of a grid can be defined by its short-circuit ratio (SCR). SCR is the reciprocal of the grid impedance. The grids with SCR < 2 are considered to be very weak. The converters introduce instability problem due to the wide variation of the grid impedance. Thus, the control of the converters becomes very difficult using conventional techniques.

A vector-control scheme is extensively used to control a voltage-source converter. A fast inner current controller is used to realize the current references generated from power equations and power references. The grid voltage at the point of common coupling (PCC) is measured and its angle is tracked using the phase-locked loop (PLL). The synchronous reference frame follows this angle obtained from the PLL. In addition, there is strong coupling between the active and the reactive power in weak grid conditions due to the PCC voltage dependency on the grid current. Therefore, the system may become unstable.

Various control methods have been introduced in the literature in order to improve the operation of voltage source converters in weak grid conditions. Re-tuning of the PLL and outer loop controllers are the typical solutions. However, re-tuning of the controllers requires the information of the grid impedance which is typically unknown and time-varying. In addition, the control schemes should be robust to the grid strength, i.e., the same controller tuning can be used irrespective of the grid strength.

BRIEF DESCRIPTION OF THE INVENTION

An object of the present invention is to provide a method and an apparatus for implementing the method so as to overcome the above problems. The objects of the invention are achieved by a method and an apparatus which are characterized by what is stated in the independent claims. The preferred embodiments of the invention are disclosed in the dependent claims.

The invention is based on the idea of modifying the current reference using feedback from the output voltage of the converter. Preferably, the current reference is modified by modifying the active power reference or the active power reference together with the reactive power reference. Alternatively, the feedback from the output voltage may be used to modify directly the current reference.

The output voltage of the converter is preferably the output voltage reference. The output voltage is high-pass filtered, and the high-pass filtered output voltage is used for modifying the components affecting reference value for current.

An advantage of the method and apparatus of the invention is that information on the grid impedance is not required in the control. Further, a robust control method is obtained without need for re-tuning the controllers or the phase-locked loop.

BRIEF DESCRIPTION OF THE DRAWINGS

In the following the invention will be described in greater detail by means of preferred embodiments with reference to the attached [accompanying] drawings, in which

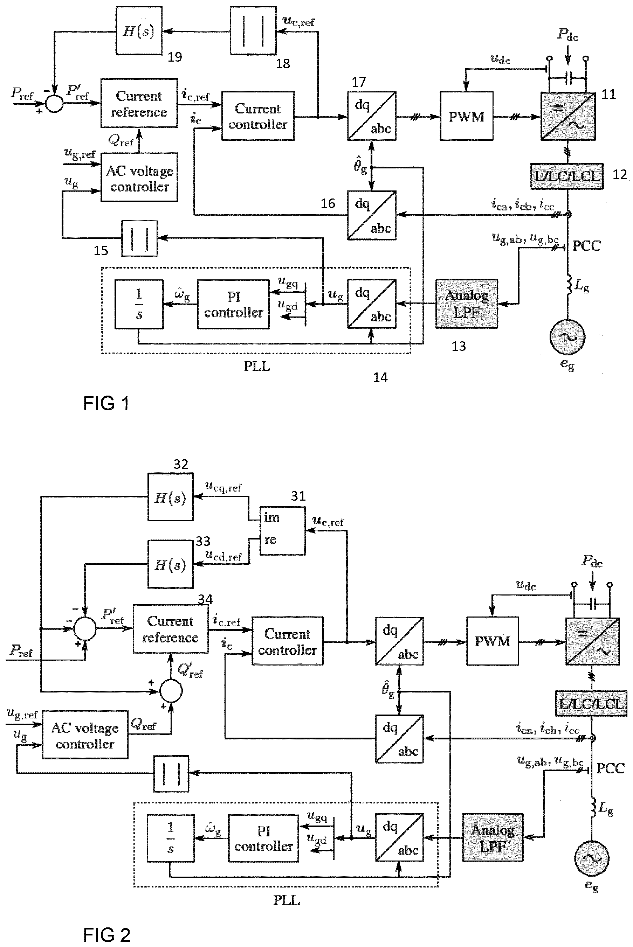

Figures 1 and 2 show embodiments of the vector control of the invention.

DETAILED DESCRIPTION OF THE INVENTION

Figure 1 shows an embodiment of the invention in connection with a converter connected to feed power to a grid. The converter 11 is shown as a DC to AC converter in which DC power $P_{dc}$ is fed to the DC side. A filter 12 is connected to the output of the converter and the electrical grid is shown as an alternating voltage $\boldsymbol{e}_g$ with impedance $L_g$. The impedance of the electrical grid may be inductive, resistive, capacitive or combination of these. The filter can be, for example L, LC or LCL -filter.

Figure 1 shows further that the phase currents $i_{ca}$, $i_{cb}$, $i_{cc}$ of the converter are measured and the grid voltage at the point of common coupling (PCC) is measured. Figure 1 shows two voltage measurements $u_{g,ab}$, $u_{g,bc}$, and the measured grid voltages are fed through a low-pass filter 13 to a phase-locked loop (PLL) for obtaining an estimate of the angle $\hat{\theta}_g$ of the voltage. The phase-locked loop of the example further has a coordinate transformation block 14 in which three-phase values of voltage are transferred to two-phase components in a manner known as such. The two phased components are commonly referred to as direct- and quadrature components and these components form a grid voltage vector $\boldsymbol{u}_g$ in dq-reference frame. Phase locked loops are known as such, and Figure 1 shows one possible implementation of the phase locked loop.

Further in Figure 1, magnitude of the grid voltage vector is calculated with block 15 which calculates the absolute value of the grid voltage vector. The magnitude $\boldsymbol{u}_g$ is provided as a feedback value to an AC voltage controller. The AC voltage controller also receives a reference for magnitude of the AC voltage $u_{g,ref}$.

The measured phase currents are also transferred to two-phase components in block 16 using the estimate of the grid voltage angle, and the obtained output current vector $i_c$ is fed as a feedback value to a current controller. The current reference vector $i_{c,ref}$ is originated in the example of Figure 1 from a current reference formation block, which receives references for active power and reactive power.

Thus in a typical vector control scheme reference values for active power $P$ and reactive power $Q$ are used for producing current references or a current reference vector. As shown in example of Figure 1, reference value for reactive power $Q_{ref}$ is obtained from an AC voltage controller which controls the magnitude of the grid voltage $u_g$ to its reference value $u_{g,ref}$. In the following description, the positive direction of the converter current is defined from the converter to the grid. Furthermore, the active power is defined to be the real part of the complex power and the reactive power is defined to be the imaginary part of the complex power. Therefore, the active power is proportional to the direct (real) component of the converter current and the reactive power is proportional to the negative quadrature (imaginary) component of the converter current.

The current reference vector $i_{c,ref}$ is inputted in a current controller which produces a voltage reference vector for the converter. As shown in Figure 1, the voltage reference vector $u_{c,ref}$ is transferred to a three-phase references in block dq/abc 17 which uses also the estimated angle of the grid. The three-phase references are fed to a pulse-width modulator which drives the switches of the converter to form an output voltage corresponding to the reference. The converter is, for example, a voltage source inverter which are known in the art of converters. The converter can be considered to operate so fast and accurately that the converter output voltage (or its average over the switching cycle) corresponds to the provided reference.

According to an embodiment of the invention, a current reference $i_{c,ref}$ for the converter is formed from an active power reference and from a reactive power reference. The current reference is fed to a current controller for producing a voltage reference $u_{c,ref}$ for the converter. In the example of Figure 1, the current reference and the voltage reference are shown as vectors in dq-coordinate system. However, the references may also be in form of their d- and q-components. Furthermore, the control system could operate in a different coordinate system, e.g., in stator coordinates.

The method further comprises high-pass filtering the output voltage of the converter. As the output voltage that is formed corresponds to the reference, the formed voltage reference $u_{c,ref}$ can preferably be used instead of measured voltage. In the method the current reference is further modified with the high-pass filtered output voltage. Preferably, the current reference is modified with the high-pass filtered voltage reference.

In the embodiment shown in Figure 1, the magnitude of the output voltage of the converter or the voltage reference $u_{c,ref}$ vector is calculated in block 18. The magnitude of the voltage vector, i.e. the length of the vector, is further high-pass filtered with block 19, and the high-pass filtered value is subtracted from the active power reference $P_{ref}$ to obtain a modified power reference $P'_{ref}$. The modified power reference is used for producing the current reference $i_{c,ref}$ vector. Thus the current reference is modified through the active power reference in the embodiment.

The high-pass filter can be presented mathematically as

$$H(s) = \frac{Ks}{s + \alpha_h}$$

In which $K$ is gain of the filter and $\alpha_h$ is the bandwidth of the filter. The modified power reference can thus be written as

$$P'_{ref} = P_{ref} - H(s)\big|u_{c,ref}\big|$$

According to another embodiment, the low-pass filtered magnitude of the output voltage vector (or the voltage reference $u_{c,ref}$ vector) can be subtracted from the d-component of the current reference vector $i_{c,ref}$. The direct component of the current reference vector is also the active power producing component.

Figure 2 shows another embodiment of the invention. Figure 2 differs from Figure 1 in that the feedback from the output voltage vector modifies the current reference vector $i_{c,ref}$ differently, that is, the control system described above in more detail is the same as in connection with Figure 1. According to an embodiment shown in Figure 2, the output voltage reference vector $u_{c,ref}$ is divided to real and imaginary components $u_{cd,ref}$ and $u_{cq,ref}$ in block 31. The real and imaginary components are also referred to as direct and quadrature components. The mentioned components are further high-pass filtered with filter blocks 32, 33. In the embodiment of Figure 2, the high-pass filtered real component of the output voltage reference from block 33 is subtracted from the active power reference $P_{ref}$. Similarly, the high-pass filtered imaginary component of the output voltage reference from block 32 is subtracted from the active power reference $P_{ref}$. Thus the both high-pass filtered components are subtracted from the power reference to obtain modified power reference P'ref.

Further, in the embodiment, the high-pass filtered imaginary component of the voltage reference is added to the reactive power reference $Q_{ref}$ to obtain a modified reactive power reference $Q'_{ref}$. The modified active power reference $P'_{ref}$ and the modified reactive power reference $Q'_{ref}$ are fed to block 34 which calculates the converter output current reference $i_{c,ref}$ vector. Thus the output voltage or reference of the output voltage is high-pass filtered, and the current reference is modified using the high-pass filtered output voltage or output voltage reference.

In the embodiment of Figure 2, the both high-pass filtered components of the output voltage are subtracted from the active power reference. However, in another embodiment, only the high-pass filtered real component of the output voltage is subtracted from active power reference $P_{\text{ref}}$ to obtain modified active power reference $P'_{\text{ref}}$. Mathematically the expressions for modified active power reference and modified reactive power reference of Figure 2 are

$$P'_{\text{ref}} = P_{\text{ref}} - H(s)u_{\text{cd,ref}} - H(s)u_{\text{cq,ref}}$$

and

$$Q'_{\text{ref}} = Q_{\text{ref}} + H(s)u_{\text{cq,ref}}$$

According to another embodiment, the high-pass filtered real and imaginary components of the output voltage vector are used for modifying the current reference directly. The high-pass filtered real component of the output voltage vector is preferably subtracted from the direct component of the current reference, i.e. from the real component of the current reference vector $i_{\text{c,ref}}$. Correspondingly, the filtered imaginary component of the output voltage vector is subtracted from the quadrature component of the current reference vector. Once the high-pass filtered components are subtracted from or added to the components of the current reference vector, the current reference vector is modified. In a further embodiment, also the high-pass filtered imaginary component of the output voltage is subtracted from the real component of the current reference.

According to further embodiments both the active power reference and the reactive power reference are modified by feeding back the real component of the voltage reference. Further, another alternative is to modify the active power reference by feeding back the real component of the converter reference voltage only.

In the above, the operation of control is described to be based on active power reference and reactive power reference. The active power reference and the reactive power reference can be substituted with active current reference and reactive current reference. When the references are changed, the operation is still as described above.

The active power or active current reference is preferably obtained from a DC voltage controller or it may be a power reference.

All the above-mentioned implementations can be modified as the active power producing current reference $i_{\text{cd,ref}}$ instead of the active-power reference $P_{\text{ref}}$ and reactive power producing current reference $i_{\text{cq,ref}}$ instead of the reactive-power reference $Q_{\text{ref}}$. When current references are used instead of power references, the implementation can be seen as a modified current controller.

It has been found out in simulations, that the modified vector control damps the oscillations in the power flow effectively. The control method of the invention provides an improved response also in the rectification mode, i.e. when the power flow is from the grid to the converter.

The converter of the invention comprises means for forming a current reference for the converter from an active power reference and a reactive power reference and means for feeding the current reference to a current controller for producing a voltage reference for the converter.

Further, the converter comprises means for high-pass filtering the produced voltage reference or measured output voltage of the converter, and means for modifying the current reference with the high-pass filtered voltage reference or measured output voltage of the converter. Typically, the vector control is implemented in a processor of the converter. The processor is capable of running a control program and obtaining the required feedback from the surrounding process, if required.

It should also be noted, that in the above description the operation of the control system is described in connection with vector control. However, the invention can be implemented in any other control system or reference frame. The idea of the invention is to high-pass filter the magnitude of the output voltage of the converter or the converter voltage reference, and to modify the current reference with a high-pass filtered component of the output voltage or voltage reference.

It will be obvious to a person skilled in the art that the inventive concept can be implemented in various ways. The invention and its embodiments are not limited to the examples described above but may vary within the scope of the claims.

**Claims**

1.  A method in connection with control of a grid connected converter, the control comprising
    forming a current reference for the converter,
    feeding the current reference to a current controller for producing a voltage reference for the converter, **characterized in that** the method comprises
    high-pass filtering the produced voltage reference or measured output voltage of the converter,
    modifying the current reference with the high-pass filtered voltage reference or measured output voltage of the converter.

2.  A method according to claim 1, wherein the high-pass filtering comprises high-pass filtering the magnitude of the voltage reference or measured output voltage of the converter.

**3.** A method according to claim 1, wherein the high-pass filtering comprises
high-pass filtering the imaginary and real components of the voltage reference or measured output voltage of the converter,
modifying the real component of the current reference with high pass filtered real component of the voltage reference or measured output voltage of the converter, and
modifying the imaginary component of the current reference with high pass filtered imaginary component of the voltage reference.

**4.** A method according to claim 3, wherein the real component of the current reference is further modified with high pass filtered imaginary component of the voltage reference or measured output voltage of the converter.

**5.** A method according to any one of the previous claims 1 to 4, wherein the current reference is modified by modifying active and/or reactive power references to obtain modified active and/or reactive power reference, which are used for forming the current reference.

**6.** A method according to any one of the previous claims 1 to 4, wherein the current reference is modified by modifying the real component of the current reference.

**7.** A method according to any one of the previous claims 1 to 4, wherein the current reference is modified by modifying the real component of the current reference with high pass filtered real component of the voltage reference or the output voltage of the converter and the imaginary component of the current reference with high pass filtered imaginary component of the voltage reference or the output voltage of the converter.

**8.** A method according to any one of the previous claims 1 to 7, wherein the modifying of the current reference comprises subtracting from and/or adding to the current reference the high-pass filtered voltage reference or measured output voltage to form a modified current reference.

**9.** A method according to any one of the previous claims 1 to 7, wherein the modifying of the current reference comprises subtracting from and/or adding to the active and/or reactive power references the high-pass filtered voltage reference of measured output voltage to form modified active and/or reactive power references.

**10.** A method according to any one of the previous claims 1 to 9, wherein the forming of the current reference for the converter comprises forming the current reference for the converter from an active power reference and a reactive power reference, from an active current reference and a reactive current reference or a combination of the previous

**11.** A converter comprising
means for forming a current reference for the converter,
means for feeding the current reference to a current controller for producing a voltage reference for the converter, **characterized in that** the converter further comprises,
means for high-pass filtering the produced voltage reference or measured output voltage of the converter, and
means for modifying the current reference with the high-pass filtered voltage reference or measured output voltage of the converter.

FIG 1

FIG 2

Europäisches
Patentamt

European
Patent Office

Office européen
des brevets

# EUROPEAN SEARCH REPORT

Application Number

EP 18 17 1822

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/032287 A1 (UNIV KINGSTON [CA]; KHAJEHODDIN SAYED ALI [CA]; GHARTEMANI MASOUD KARI) 24 March 2011 (2011-03-24) <br> * page 4, lines 11-13; figures 2, 5 * <br> ----- | 1-11 | INV. <br> H02M1/00 |
| X | WO 2008/103946 A2 (VIRGINIA TECH INTELL PROP [US]; LAI JIH-SHENG [US]; PARK SUNGYEUI [US]) 28 August 2008 (2008-08-28) <br> * figures 1, 7 * <br> ----- | 1,11 | |

TECHNICAL FIELDS
SEARCHED (IPC)

H02M

The present search report has been drawn up for all claims

| Place of search | Date of completion of the search | Examiner |
|---|---|---|
| Munich | 8 October 2018 | Meyer, Andreas Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 18 17 1822

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2018

| Patent document cited in search report | | | Publication date | Patent family member(s) | | | Publication date |
|---|---|---|---|---|---|---|---|
| WO 2011032287 | A1 | | 24-03-2011 | AU | 2010295163 | A1 | 12-04-2012 |
| | | | | CA | 2774401 | A1 | 24-03-2011 |
| | | | | CN | 102598455 | A | 18-07-2012 |
| | | | | EP | 2478606 | A1 | 25-07-2012 |
| | | | | JP | 5810470 | B2 | 11-11-2015 |
| | | | | JP | 2013505688 | A | 14-02-2013 |
| | | | | US | 2011130889 | A1 | 02-06-2011 |
| | | | | US | 2014204633 | A1 | 24-07-2014 |
| | | | | WO | 2011032287 | A1 | 24-03-2011 |
| WO 2008103946 | A2 | | 28-08-2008 | CN | 101842956 | A | 22-09-2010 |
| | | | | EP | 2122816 | A2 | 25-11-2009 |
| | | | | US | 2008205096 | A1 | 28-08-2008 |
| | | | | WO | 2008103946 | A2 | 28-08-2008 |

EPO FORM P0459

For more details about this annex : see Official Journal of the European Patent Office, No. 12/82